Europäisches Patentamt

European Patent Office

Office européen des brevets

(19)

(11) Veröffentlichungsnummer: **0 019 323**

**A1**

(12) # EUROPÄISCHE PATENTANMELDUNG

(21) Anmeldenummer: **80200396.2**

(22) Anmeldetag: **29.04.80**

(51) Int. Cl.³: **F 02 F 3/22**

(30) Priorität: **16.05.79 DE 2919638**

(43) Veröffentlichungstag der Anmeldung:
**26.11.80 Patentblatt 80/24**

(84) Benannte Vertragsstaaten:
**CH DE FR GB IT LI NL SE**

(71) Anmelder: **KARL SCHMIDT GmbH**
**Christian-Schmidt-Strasse 8/12**
**D-7107 Neckarsulm(DE)**

(72) Erfinder: **Moebus, Horst, Dr.**
**Friedrichstrasse 36**
**D-7107 Neckarsulm(DE)**

(74) Vertreter: **Fischer, Ernst, Dr.**
**Reuterweg 14**
**D-6000 Frankfurt am Main 1(DE)**

(54) **Kolben für Brennkraftmaschinen.**

(57) Bei einem gebauten gekühlten Kolben mit im Bereich der Trennebene liegenden Kühlkanal (9) stützt sich das aus geschmiedetem Stahl bestehende Oberteil (2) mit auf seiner Unterseite verlaufenden Rippen (3) auf korrespondierende Flächen (4) des Unterteils (5) ab. Zur Verbesserung der thermischen und mechanischen Belastbarkeit ist das Oberteil (2) mit dem aus einem Eisengußwerkstoff bestehenden Unterteil (5) über Ladungsträgerstrahlen verschweißt.

EP 0 019 323 A1

KARL SCHMIDT GMBH
Christian-Schmidt-Straße 8/12
7107 Neckarsulm

0019323
15.05.1979
-DRQ/GKP-

Prov. Nr. 8416 KS

Kolben für Brennkraftmaschinen
--------------------------------

Die Erfindung betrifft einen aus einem Ober- und einem Unterteil bestehenden, mit einem oder mehreren im Bereich ihrer Trennebene liegenden Kühlkanälen versehenen Kolben für Brennkraftmaschinen, insbesondere für schnellaufende Hochleistungsdieselmotoren, dessen aus geschmiedetem Stahl bestehendes Oberteil sich mit seinen auf der Unterseite verlaufenden Rippen auf den gegenüberliegenden Flächen des Unterteils abstützt.

Für Brennkraftmaschinen gelangen heute im allgemeinen drei Kolbenbauarten zur Anwendung:

a) Einteilig gegossene oder geschmiedete Leichtmetallkolben.

b) Mehrteilige, sogenannte gebaute Kolben, deren Oberteil aus einem Eisen- und deren Unterteil aus einem Leichtmetallwerkstoff besteht.

c) Einteilig, aus einem Eisenwerkstoff gegossene Kolben.

Bei den heute in Betrieb befindlichen schnell- und mittelschnellaufenden Viertakt-Dieselmotoren treten die einteiligen Leichtmetallkolben immer mehr in den Hintergrund, da Leichtmetall als alleiniger Werkstoff den steigenden Anforderungen zeitgemäßer Motoren hinsichtlich kontinuierlicher Leistungssteigerung, schlechterer

- 2 -

Kraftstoffqualitäten und längerer Lebensdauer nicht mehr genügt. Für die in Entwicklung befindlichen Motoren der 80er Jahre werden deshalb im wesentlichen nur die zwei anderen Kolbenbauarten zur Anwendung kommen.

Die höheren Verbrennungsdrücke und -temperaturen müssen dabei mit den bestehenden technischen Möglichkeiten vereinbart werden, die durch den Werkstoff und dessen Verarbeitung und nicht zuletzt durch wirtschaftliche Überlegungen vorgegeben sind. Diese Gründe führen gemeinsam mit dem Motorenhersteller zu dem in der Technik üblichen Kompromiß, der das Optimum zwischen Aufwand und Funktion darstellt. Im Hinblick auf den geforderten hohen Sicherheitsfaktor und die lange Lebensdauer erfüllt beim heutigen Stand der Technik der gebaute, gekühlte Kolben im allgemein gestellten Anforderungen.

Der gebaute gekühlte Kolben benutzt das Prinzip der Trennung der Werkstoffe. Entsprechend den an die verschiedenen Teile des Kolbens gestellten Aufgaben wird jeder Werkstoff so eingesetzt, daß möglichst nur seine Vorteile zur Auswirkung kommen. Für das einer hohen Temperatur-, Festigkeits- und Verschleißbeanspruchung unterliegende Oberteil mit Brennraummulde und Kolbenringnuten wird geschmiedeter Stahl, z.B. 42 CrMo 4 V, eingesetzt. Das Unterteil mit dem im Zylinder geführten Schaft und den Bolzenaugen besteht bei der heutigen Standardausführung aus einer gechmiedeten, eutektischen Aluminium-Silizium-Legierung. Damit werden die optimalen Gleiteigenschaften und das geringe spezifische Gewicht des Aluminiums ausgenutzt. Zur Verbindung der beiden Teile hat sich eine Verschraubung als beste Methode durchgesetzt. Der kritische Punkt dieser Konstruktion liegt in dem im Vergleich zum Stahl großen Wärme-

0019323

dehnungskoeffizient und kleinem Elastizitätsmodul des
Aluminiums sowie dessen mit zunehmender Betriebsdauer
fallender ertragbarer Beanspruchung.

Für die einteilig aus einem Eisenwerkstoff gegossenen
Kolben wird in neuerer Zeit Gußeisen mit Kugelgraphit,
das eine hohe Festigkeit und Dehnung besitzt, verwendet.
Infolge der niedrigeren Wärmeleitzahl von Gußeisen mit
Kugelgraphit und der besonderen Anordnung des Kühlkanals
wird fast die gesamte in den Kolben einfallende Wärmemenge bereits im oberen Viertel abgeführt, so daß Schaft
und Bolzenaugen die Temperatur des Schmieröls annehmen.

Deshalb sind die von den Leichtmetallkolben her bekannten
und dort auch erforderlichen Formgebungen am Schaft mit
variablen Balligkeiten und komplizierten Ovalitäten
beim aus Gußeisen mit Kugelgraphit bestehenden Kolben
nicht mehr zwingend erforderlich.

Bei Vorliegen von ungünstig geformten, d.h. hinterschnittenen Brennräumen im Kolbenboden oder unter erschwerten Betriebsbedingungen können im Kolbenboden
an exponierten Stellen Oberflächentemperaturen über
$450^{\circ}$C auftreten, die zu einer Ferritisierung des Gußeisens mit Kugelgraphit führen und damit einen Abfall
der guten Festigkeitseigenschaften hervorrufen.

Es wurde gefunden, daß sich dieses Problem lösen läßt,
wenn erfindungsgemäß bei dem eingangs genannten Kolben
das Unterteil aus einem Eisenkohlenstoff-Gußwerkstoff
hoher Festigkeit und Dehnung, vorzugsweise Gußeisen
mit Kugelgraphit, besteht und Unter- und Oberteil über
Ladungsträgerstrahlen miteinander verschweißt sind.

Besonders vorteilhaft ist es, wenn die Verschweißung über eine Zwischenschicht aus Nickel oder seinen Legierungen erfolgt.

Ein solcher Kolben weist eine extrem hohe thermische und mechanische Belastbarkeit auf. Darüber hinaus wird - verglichen mit einem einteiligen, aus Gußeisen mit Kugelgraphit bestehenden Kolben - eine nicht unbeträchtliche Gewichtsreduzierung erzielt. Auch weist der erfindungsgemäß gestaltete Kolben die gleichen guten Laufeigenschaften wie ein einteiliger Kolben auf. Als weiterer Vorteil kommt hinzu, daß es möglich ist, Ober- und Unterteil spanend zu bearbeiten, wodurch eine definierte Wandstärke und eine entsprechende Oberflächengüte in den sonst unzugänglichen Bereichen der Kühlkanäle erreichbar sind. Infolge des dadurch bedingten Wegfalls der Gußoberfläche wird die Dauerfestigkeit erhöht. Als Folge der definierten Wandstärke läßt sich das minimale Gewicht und die Belastungsgrenze vorherberechnen. Im übrigen ist eine Kontrolle des Kühlkanals in einfacher und sicherer Weise möglich.

Es ist zwar schon versucht worden, ein aus Stahl bestehendes Oberteil mit dem aus Gußeisen mit Kugelgraphit bestehenden Unterteil durch eine Verschraubung zu verbinden, doch hat sich diese Kolbenbauart bisher nicht durchsetzen können, da das Gewicht des Kolbens durch die Schrauben sowie durch größere Wanddicke im Bereich der Verschraubung vergleichsweise beträchtlich erhöht wird, das Risiko des Lösens der Schrauben besteht, die Gefahr ihrer Überhitzung für den Fall, daß sie vom Kolbenboden her eingeschraubt sind, gegeben ist und ihre Montage mit einem erheblichen Aufwand verbunden ist.

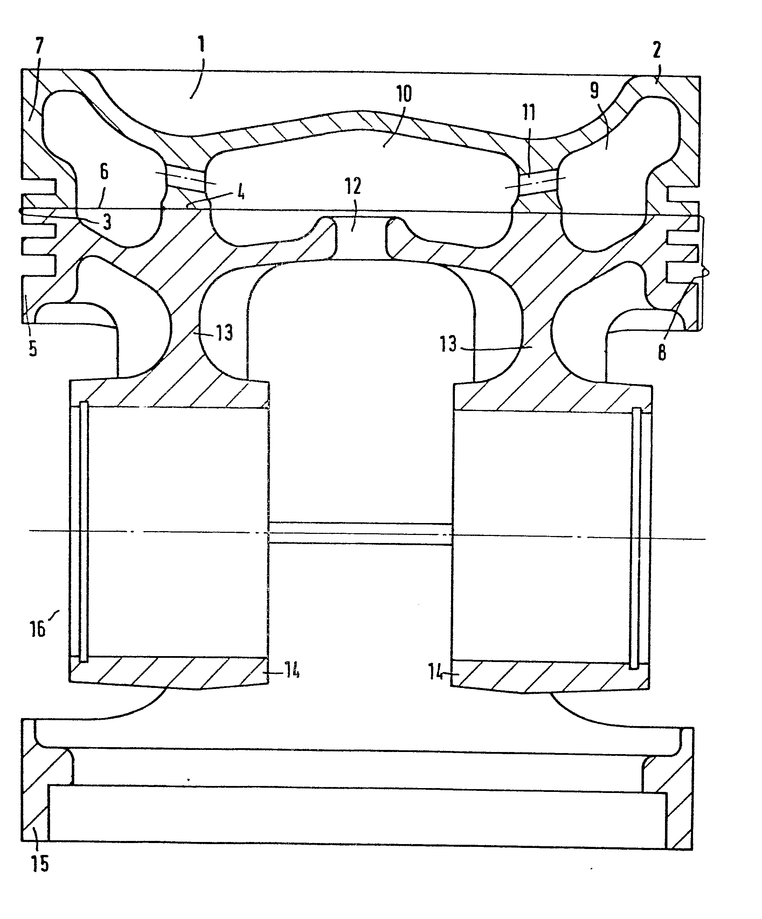

Die Erfindung ist in der Zeichnung anhand eines durch die Bolzenebene verlaufenden Längsschnitts dargestellt und wird nachstehend erläutert:

Das aus Schmiedestahl des Typs X45CrSi9V bestehende, einen flachen Brennraum 1 aufweisende Oberteil 2 des Kolbens stützt sich über die auf seiner Unterseite umlaufende Rippe 3 auf korrespondierende Flächen 4 des aus Gußeisen mit Kugelgraphit des Typs GGG 60 gebildeten Unterteils 5 ab. Das Oberteil 2 ist mit dem Unterteil 5 über eine Nickelzwischenschicht 6 mittels Ladungsträgerstrahlen verschweißt. Die Rippe 3 bildet die innere Begrenzung des hinter dem Feuersteg 7 und der Ringpartie 8 angeordneten, zur Verbindungsebene offenen Kühlkanals 9. Die Rippe 3 schließt ferner den zentrisch angeordneten Kühlraum 10 ein. Die in den Kühlkanal 9 mündende, nicht dargestellte Kühlmittelzuleitung ist über den Kühlkanal 9 und die Kühlmittelübertrittsöffnungen 11 in der Rippe 3 mit dem Kühlraum 10 verbunden, aus dem es über die Ablauföffnung 12 in den Kurbelraum zurückfließt.

Die über die Rippen 13 frei hängenden Bolzennaben 14 sind über die nicht dargestellten Rippen mit dem Kolbenschaft 15 verbunden. Gegenüber den Bolzennaben 14 befinden sich Durchbrechungen 16 im Kolbenschaft 15.

0019323

PATENTANSPRÜCHE
---------------

1. Aus einem Ober- und einem Unterteil bestehender, mit einem oder mehreren im Bereich ihrer Trennebene liegenden Kühlkanälen versehener Kolben für Brennkraftmaschinen, insbesondere für schnellaufende Hochleistungsdieselmotoren, dessen aus geschmiedetem Stahl bestehendes Oberteil sich mit seinen auf der Unterseite verlaufenden Rippen auf den gegenüberliegenden Flächen des Unterteils abstützt, dadurch gekennzeichnet, daß das Oberteil (2) mit dem aus einem Eisenkohlenstoff-Gußwerkstoff hoher Festigkeit und Dehnung, vorzugsweise Gußeisen mit Kugelgraphit, bestehenden Unterteil (5) über Ladungsträgerstrahlen verschweißt ist.

2. Kolben nach Anspruch 1, dadurch gekennzeichnet, daß das Oberteil (2) mit dem Unterteil (5) über eine Zwischenschicht (6) aus Nickel verschweißt ist.

Europäisches Patentamt

**EUROPÄISCHER RECHERCHENBERICHT**

Nummer der Anmeldung

EP 80 20 0396

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | EP - A - 0 000 592 (SCHMIDT) <br> * Seite 2, Zeilen 1-10; Seite 3, Zeile 14 bis Seite 4, Zeile 17; Seite 4, Zeilen 29-31; Figur 10 * <br><br> -- | 1,2 |
| | DE - A - 2 038 022 (ARENDT) <br> * Seite 1, Zeilen 10-17; Seite 2, Zeilen 22-25 * <br><br> -- | 1 |
| | FR - A - 2 127 040 (SEMT) <br> * Seite 1, Zeilen 1-5; Seite 1, Zeilen 23-28, Zeile 37 bis Seite 2, Zeile 4; Figur 1 * <br><br> -- | 1 |
| AT | WELDING JOURNAL, Band 54, November 1975, Miami, US, P. BARTLE: "Diffusion bonding: A look at the future", Seiten 799-804 <br> * Seite 802; Figur 4 * <br><br> -- | 2 |
| A | FR - A - 1 320 012 (WESTINGHOUSE) <br> * Seite 6; Zusammenfassung * <br><br> -- | 2 |
| A | DE - A - 2 042 488 (SCHRECK-MIEVES) <br> * Seite 4, Zeilen 13-23 * <br><br> ---- | 2 |

**KLASSIFIKATION DER ANMELDUNG (Int.Cl. 3)**

F 02 F 3/22

**RECHERCHIERTE SACHGEBIETE (Int. Cl. 3)**

F 01 P
F 02 F
B 23 K
B 23 P

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-08-1980 | KOOIJMAN |

EPA form 1503.1 06.78